# EUROPEAN PATENT APPLICATION

(11) **EP 4 642 069 A1**
(43) Date of publication of application: **29.10.2025**
(21) Application number: 22969253.8
(22) Date of filing: 23.12.2022
(51) Int. Cl.: H04W 12/06, H04W 88/14, H04W 92/24

(54) **NETWORK NODE DEVICE, COMMUNICATION SYSTEM, AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); SAWADA, Masahiro, Tokyo 100-6150 (JP); MUTIKAINEN, Jari, 80687 Munich (DE)
(74) Representative: Hoffmann Eitle
(86) International application number: PCT/JP2022/047613
(87) International publication number: WO 2024/134870

(57) **Abstract**

A network node apparatus includes: a reception unit configured to receive a request for a specific process from a base station when a procedure, for the specific process, including an authentication procedure for a terminal, is executed in a communication system; and a transmission unit configured to transfer the request to a specific network node apparatus that includes a function for executing the authentication procedure.

## Description

### Technical Field

The present invention relates to a network node apparatus in a radio communication system.

### Background Art

A network architecture including an 5GC (5G Core Network) corresponding to an EPC (Evolved Packet Core) which is a core network in an LTE (Long Term Evolution) network architecture and an NG-RAN (Next Generation-Radio Access Network) corresponding to an E-UTRAN (Evolved Universal Terrestrial Radio Access Network) which is a RAN (Radio Access Network) in the LTE network architecture is under study (for example, Non-Patent Document 1 and Non-Patent Document 2), in NR (New Radio) (also referred to as 5G) which is a successor system of LTE (Long Term Evolution). In addition, technical specifications of 6G, which is a successor system of NR, are being studied.

### Citation List

### Non-Patent Document

[Non-Patent Document 1] 3GPP TS 23.501 V17.6.0 (2022-09)
[Non-Patent Document 2] 3GPP TS 23.502 V17.6.0 (2022-09)

### Summary of the Invention

### Problem to be Solved by the Invention

In the existing 5GS (5G System) disclosed in Non-Patent Document 1 and Non-Patent Document 2, even if a network node apparatus that processes a signal related to a terminal is arranged at a network edge (a location close to the terminal), the signal needs to pass through an access and mobility management function (AMF) located in the center of the network, and thus a signal delay occurs. Note that such a problem may occur due to a network node apparatus other than the AMF.

The present invention has been made in view of the above, and an object of the present invention is to provide a technique that enables reduction of signal delay in a communication system.

### Means for Solving the Problem

According to the disclosed technique, there is provided a network node apparatus including:
a reception unit configured to receive a request for a specific process from a base station when a procedure, for the specific process, including an authentication procedure for a terminal, is executed in a communication system; and
a transmission unit configured to transfer the request to a specific network node apparatus that includes a function for executing the authentication procedure.

### Effects of the Invention

According to the disclosed technique, a technique that enables reduction of signal delay in a communication system is provided.

### Brief Description of the Drawings

[Fig. 1] FIG. 1 is a diagram for explaining a radio communication system according to an embodiment of the present invention;
[Fig. 2] FIG. 2 is a diagram showing an example of a configuration of a radio communication system according to an embodiment of the present invention;
[Fig. 3] FIG. 3 is a diagram showing Figure 8.2.2.1-1 of Non-Patent Document 1;
[Fig. 4] FIG. 4 is a diagram showing an example of a system configuration according to a first embodiment;
[Fig. 5] FIG. 5 is a diagram showing "Figure 4.2.2.2.2-1: Registration procedure" of Non-Patent Document 2;
[Fig. 6] FIG. 6 is a diagram showing "Figure 4.2.2.2.2-1: Registration procedure" of Non-Patent Document 2;
[Fig. 7] FIG. 7 is a diagram showing "Figure 4.2.2.2.3-1: Registration with AMF re-allocation procedure" of Non-Patent Document 2;
[Fig. 8] FIG. 8 is a diagram for explaining an initial registration procedure in the first embodiment;
[Fig. 9] FIG. 9 is a diagram showing "Figure 4.3.2.2.1-1: UE-requested PDU Session Establishment for non-roaming and roaming with local breakout" in Non-Patent Document 2;
[Fig. 10] FIG. 10 is a diagram showing "Figure 4.3.2.2.1-1: UE-requested PDU Session Establishment for non-roaming and roaming with local breakout" in Non-Patent Document 2;
[Fig. 11] FIG. 11 is a diagram for describing a PDU session establishment procedure according to the first embodiment;
[Fig. 12] FIG. 12 is a diagram illustrating an example of a system configuration according to a second embodiment;
[Fig. 13] FIG. 13 is a diagram for explaining a procedure example in the second embodiment;
[Fig. 14] FIG. 14 is a diagram illustrating "Figure 4.9.1.3.2-1: Inter NG-RAN node N2 based handover, Preparation phase" in Non-Patent Document 2;
[Fig. 15] FIG. 15 is a diagram illustrating "Figure 4.9.1.3.3-1: Inter NG-RAN node N2 based handover, Execution phase" in Non-Patent Document 2;
[Fig. 16] FIG. 16 is a diagram for explaining a procedure of N2HO in the second embodiment;
[Fig. 17] FIG. 17 is a diagram for explaining a procedure of N2HO in the second embodiment;
[Fig. 18] FIG. 18 is a diagram showing an example of a functional configuration of a base station and a network node apparatus according to an embodiment of the present invention;
[Fig. 19] FIG. 19 is a diagram showing an example of a functional configuration of a terminal according to an embodiment of the present invention;
[Fig. 20] FIG. 20 is a diagram showing an example of a hardware configuration of an apparatus according to an embodiment of the present invention; and
[Fig. 21] FIG. 21 is a diagram showing an example of a configuration of a vehicle according to an embodiment of the present invention.

### Description of Embodiments

Hereinafter, an embodiment of the present invention will be described with reference to the drawings. The embodiment described below is an example, and the embodiment to which the present invention is applied is not limited to the following embodiment.

In the operation of the radio communication system according to the embodiment of the present invention, an existing technique may be used as appropriate. The existing technique is, for example, existing NR or LTE, but is not limited to existing NR or LTE.

In the embodiments of the present invention described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH), which are used in the existing LTE and NR, are used. This is for convenience of description, and signals, functions, and the like similar to these may be referred to by other names.

In the embodiment of the present invention, a duplex scheme may be a time division duplex (TDD) scheme, a frequency division duplex (FDD) scheme, or another scheme (for example, flexible duplex or the like).

In the embodiments of the present invention, a radio parameter or the like being "configured" may mean that a predetermined value is configured in advance (pre-configured), or may mean that a radio parameter notified from a base station or a terminal is configured.

### (System Configuration)

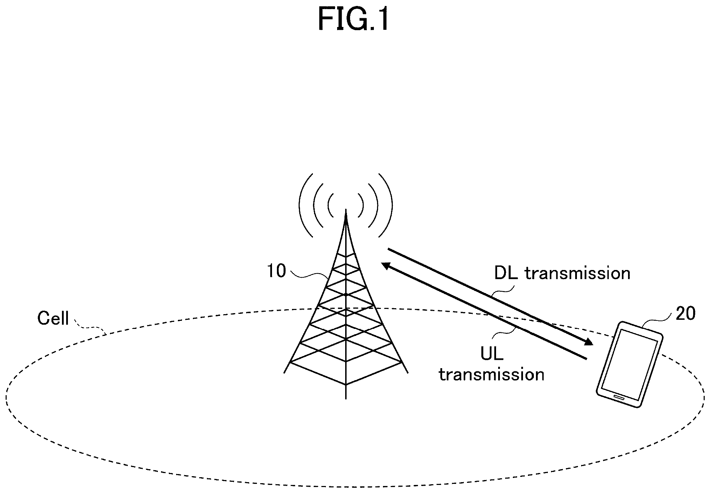

FIG. 1 is a diagram for explaining a radio communication system according to an embodiment of the present invention. As shown in FIG. 1, a radio communication system according to an embodiment of the present invention includes a base station 10 and a terminal 20. Although FIG. 1 illustrates one base station 10 and one terminal 20, this is merely an example, and a plurality of base stations 10 and a plurality of terminals 20 may be provided.

The base station 10 is a communication apparatus that provides one or more cells and performs radio communication with the terminal 20. The physical resources of the radio signal are defined in the time domain and the frequency domain, and the time domain is defined by the number of symbols of orthogonal frequency division multiplexing (OFDM). The frequency domain may be defined by the number of subcarriers or the number of resource blocks. In addition, a transmission time interval (TTI) in the time domain may be a slot, or a TTI may be a subframe.

The base station 10 transmits a synchronization signal and system information to the terminal 20. The synchronization signal is, for example, an NR-PSS and an NR-SSS. The system information is transmitted, for example, on the NR-PBCH, and is also referred to as broadcast information. The synchronization signal and the system information may be referred to as an SS/PBCH block (SSB). As illustrated in FIG. 1, the base station 10 transmits a control signal or data to the terminal 20 on a downlink (DL), and receives a control signal or data from the terminal 20 on an uplink (UL). Both the base station 10 and the terminal 20 can transmit and receive signals by performing beamforming. In addition, both the base station 10 and the terminal 20 can apply communication by multiple input multiple output (MIMO) to DL or UL. In addition, both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group cell (PSCell: Primary SCG Cell) of another base station 10 by dual connectivity (DC).

The terminal 20 is a communication apparatus having a radio communication function, such as a smartphone, a mobile phone, a tablet, a wearable terminal, and a communication module for M2M (Machine-to-Machine). As illustrated in FIG. 1, the terminal 20 receives a control signal or data from the base station 10 in the DL and transmits a control signal or data to the base station 10 in the UL, thereby using various communication services provided by the radio communication system. The terminal 20 receives various reference signals transmitted from base station 10, and measures channel quality based on the reception result of the reference signal. Note that the terminal 20 may be referred to as a UE, and the base station 10 may be referred to as a gNB. The base station 10 may be referred to as a RAN, an NG-RAN, or the like.

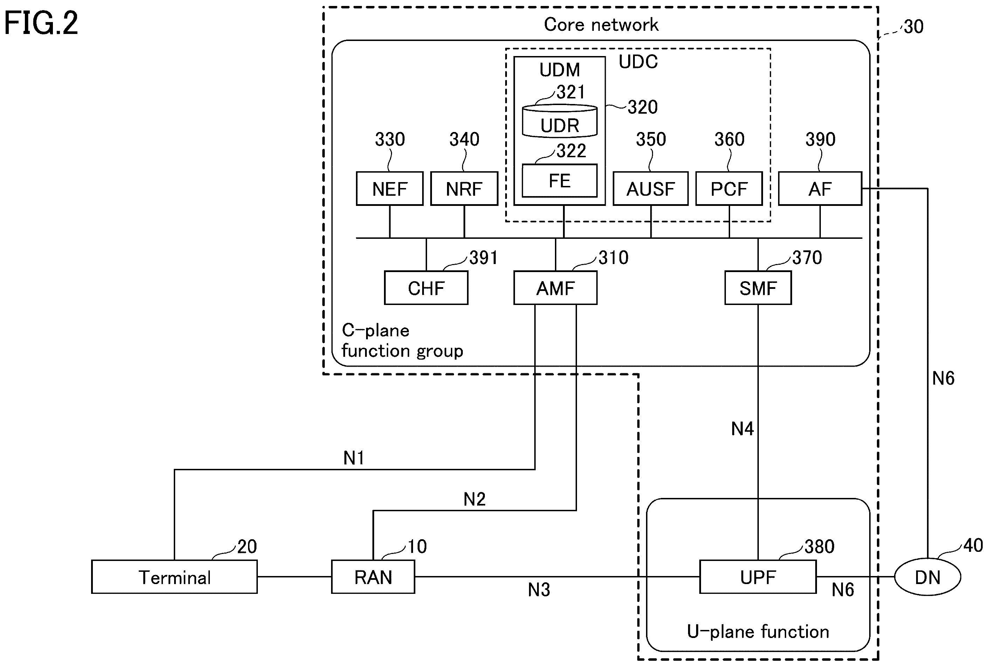

FIG. 2 is a diagram showing an example of a configuration of a radio communication system according to an embodiment of the present invention. The radio communication system includes the RAN 10 (base stations), the terminal 20, a core network 30, and a DN (Data Network) 40. Note that the radio communication system may be referred to as a mobile communication system or a communication system.

The core network 30 is a network including an exchange, a subscriber information management apparatus, and the like. The core network 30 includes a network node that realizes a U-Plane function and a network node group that realizes a C-Plane function group. Note that the network node may be referred to as a "network node apparatus".

The U-Plane function is a function of executing a transmission and reception process of user data. The network node that realizes the U-Plane function is, for example, a user plane function (UPF) 380. The UPF 380 is a network node having functions such as a protocol data unit (PDU) session point for the outside for interconnection with the DN 40, routing and forwarding of packets, and quality of service (QoS) handling of a user plane. The UPF 380 controls transmission and reception of information between the DN 40 and the terminal 20. The UPF 380 and the DN 40 may be constituted by one or more network slices.

The C-Plane function group is a function group that executes a series of control processes for establishing communication and the like. The network node group that realizes the C-Plane function group includes, for example, an access and mobility management function (AMF) 310, a unified data management (UDM) 320, a network exposure function (NEF) 330, a network repository function (NRF) 340, an authentication server function (AUSF) 350, a policy control function (PCF) 360, a session management function (SMF) 370, an application function (AF) 390, and a charging function (CHF) 391.

The AMF 310 is a network node having functions such as termination of a RAN interface, termination of a non-access stratum (NAS), registration management, connection management, reachability management, and mobility management.

To be more specific, the AMF 310 may include, for example, functions described as functions of AMF in the non-patent document 1 and the non-patent document 2. As described later, in the present embodiment, an AMF obtained by reducing some functions from the functions of the AMF 310 is used together with the AMF 310. The AMF 310 that does not have a reduced functionality may be referred to as a "normal AMF"**.**

The NRF 340 is a network node that has a function to discover a Network Function (NF) instance that provides a service. The UDM 320 is a network node that manages subscriber data and authentication data. The UDM 320 includes a user data repository (UDR) 321 and a front end (FE) 322. The FE 322 processes the subscriber information.

The SMF 370 is a network node having functions such as session management, IP (Internet Protocol) address assignment and management of the terminal 20, DHCP (Dynamic Host Configuration Protocol) functions, ARP (Address Resolution Protocol) proxy, roaming functions, and the like. The NEF 330 is a network node having functions of notifying other network functions (NFs) of capabilities and events. The PCF 360 is a network node having a function of performing policy control of a network.

The AF (Application Function) 390 is a network node having a function of controlling an application server.

The CHF (Charging Function) 391 is a network node that determines the amount of money charged to a subscriber and details, and requests a details system 50 to generate a subscriber's details.

The AMF 310 and the RAN 10 are communicably connected as a N2 link. The UPF 380 and the RAN 10 are communicably connected as a N3 link. The UPF 380 and the SMF 370 are communicably connected as a N4 link. The UPF 380 and the DN 40 are communicably connected as a N6 link.

### (About Problem)

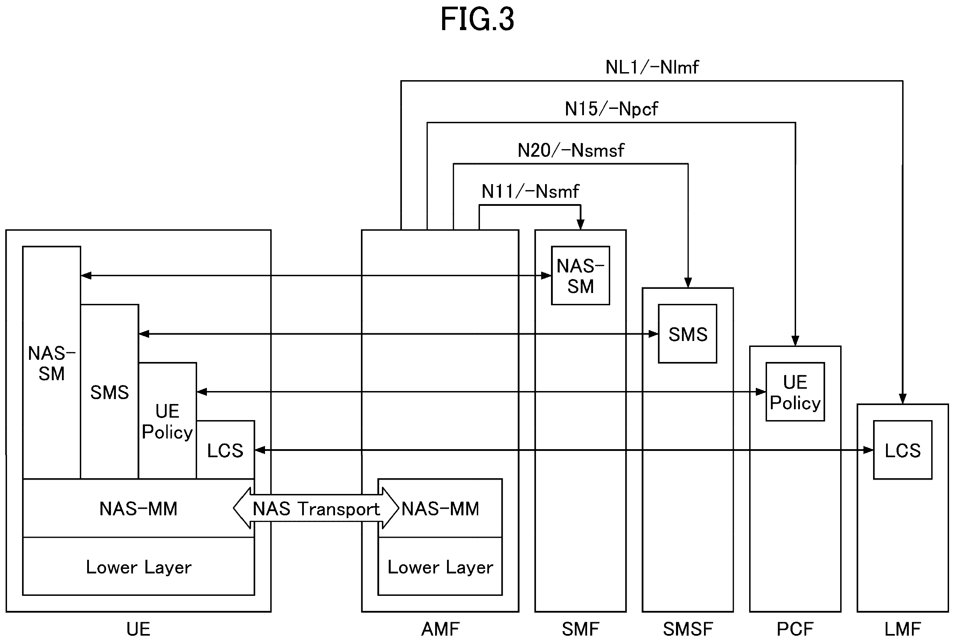

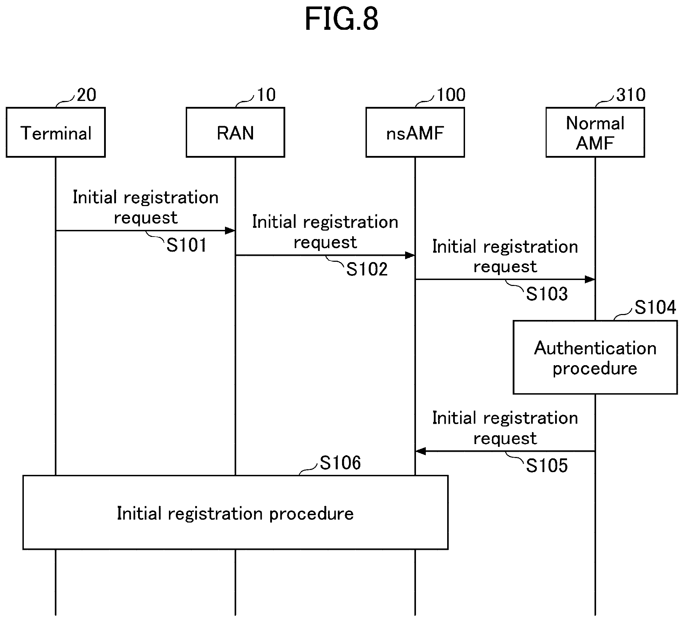

Next, a problem according to the technique of the embodiment will be described in detail. In an existing 5GS (5G system) as shown in FIG. 2, as shown in FIG. 3 (Figure 8.2.2.1-1 of Non-Patent Document 1), each signal of "NAS-MM, NAS-SM, SMS, UE policy, and LCS" related to the terminal 20 is carried on the NAS transport from the terminal 20 to the AMF.

As shown in FIG. 3, the NAS transport is terminated at the AMF. That is, even when "the SMF terminating the NAS-SM, the SMSF terminating the SMS, the PCF terminating the UE policy, and the LMF terminating the LCS" are at the network edge, the above-described related signals pass through the network center as long as the AMF is at the network center. That is, a signal delay occurs.

Note that the problem of occurrence of signal delay as described above is not limited to the cause being a signal passing through the AMF. The problem may also occur due to a network node apparatus other than the AMF.

Hereinafter, as an example, a first embodiment and a second embodiment will be described as a technology for solving the problem in a case where the problem of signal delay is caused by the AMF, but the technology (the first embodiment and the second embodiment) described below is applicable to a network node apparatus that is not limited to the AMF.

In the following, a normal AMF that does not perform function reduction is referred to as a "normal AMF".

### (Overview of First Embodiment, System Configuration)

In the first embodiment, an AMF that does not have a SEAF (SEcurity Anchor Function) is arranged near the RAN 10. That is, in addition to the normal AMF 310, an AMF that does not have the SEAF function is deployed. In the first embodiment, the AMF without the SEAF function is referred to as an nsAMF. The "ns" in nsAMS is intended to be "no-SEAF".

The normal AMF 310 is provided with the SEAF function. The SEAF function is an authenticating function in the normal AMF 310, and holds an anchor key or the like unique to a serving network, and the SEAF function is used in a procedure for authenticating the terminal 20.

The nsAMF can be easily obtained by simply not activating the SEAF function in the normal AMF 310. Alternatively, the nsAMF may be realized by not implementing only the SEAF function among the functions implemented in the normal AMF 310. The I/F of the nsAMF is basically the same as that of the normal AMF, and can be easily implemented.

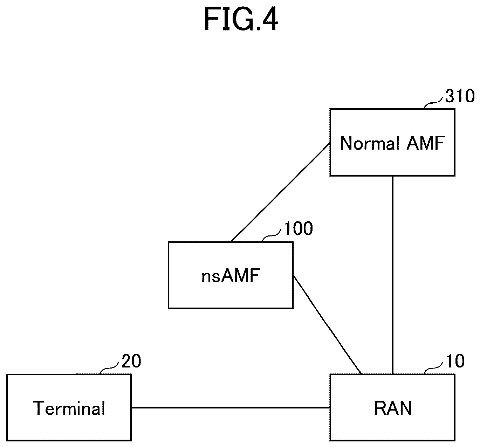

FIG. 4 illustrates an example of an arrangement configuration of the AMF, the terminal 20, and the RAN 10. As shown in FIG. 4, in addition to the normal AMF 310 deployed in the middle of the network, the nsAMF 100 is disposed near the RAN 10. The RAN 10 is able to communicate with both the nsAMF 100 and the AMF 310. Further, communication is possible between the nsAMF 100 and the AMF 310.

The "near the RAN 10" may be a small geographical distance from the RAN 10 or a small network distance (for example, delay) from the RAN 10. In the case of constructing a virtual node and network on a computer using a container or the like, the network may be a virtual network on the computer.

In the first embodiment, as described above, since the nsAMF 100 is placed "near the RAN 10", it is possible to reduce signal delay in a procedure that does not use the normal AMF 310 (a procedure that does not involve an authenticating procedure). In addition, since the SEAF function is not arranged in the nsAMF 100, the nsAMF 100 is easier to implement and manage than the normal AMF 310.

In the first embodiment, when a procedure accompanied by an authentication procedure occurs in using the nsAMF 100, the process is switched so that the authentication procedure is performed by the normal AMF (AMF 310). In the first embodiment, the registration procedure is taken as an example of the procedure accompanied by the authentication procedure, but the procedure accompanied by the authentication procedure is not limited to the registration procedure.

When the process is switched, the " indication of AMF without SEAF function", which is an indication indicating the switching source, is sent from the nsAMF 100 to the AMF 310. After the switching of the process, the normal AMF 310 executes the authentication procedure (or the procedure including the authentication procedure) in the registration procedure. When the authentication procedure (or the procedure including the authentication procedure) by the normal AMF 310 is finished, the process is switched from the normal AMF 310 to the nsAMF 100, and the subsequent registration procedure is performed by using the nsAMF 100 without the normal AMF 310. Note that the indication indicating the switching source may be referred to as information indicating the switching source.

Furthermore, a procedure (for example, a PDU session establishment procedure) that does not involve an authentication procedure (that is, a procedure using the SEAF function) is performed by using the nsAMF 100 without going through the normal AMF 310.

### (First Embodiment: Initial Registration Procedure)

As an example of the procedure in the first embodiment, an initial registration procedure accompanied by an authentication procedure will be described.

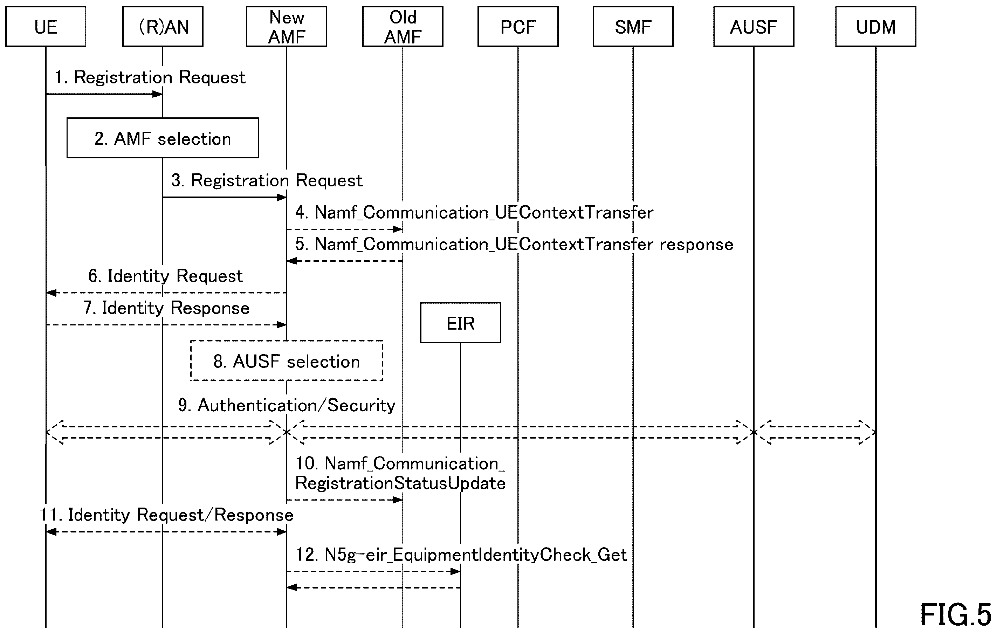

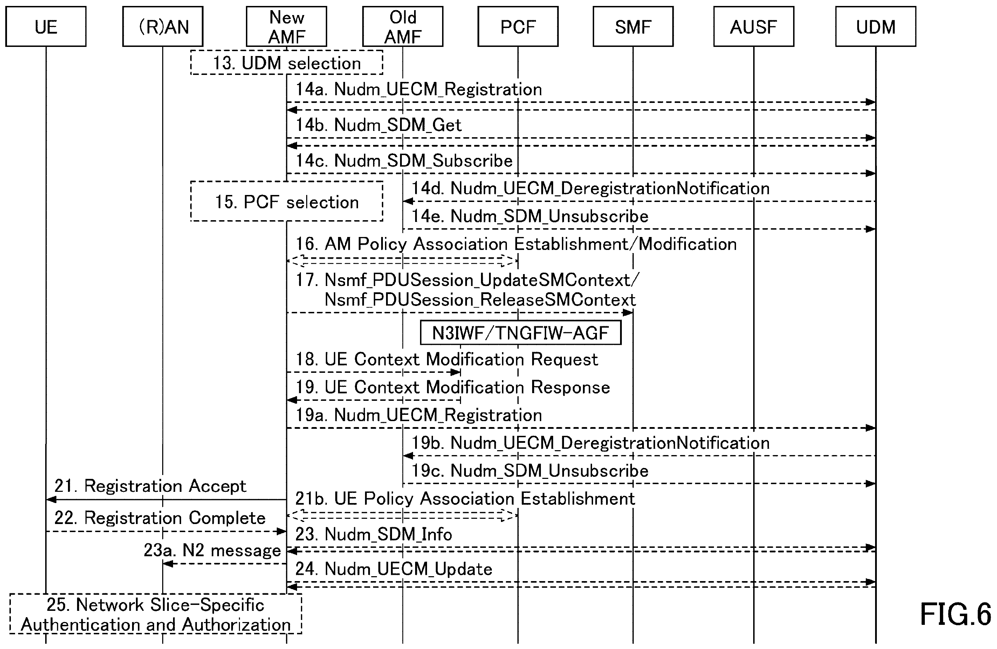

In a case where the nsAMF 100 is not used (that is, in a case where only the normal AMF 310 is used as the AMF), for example, initial registration can be performed in a procedure described in "4.2.2.2 Registration procedures" in non-patent document 2. For example, the normal AMF 310 may operate as a "New AMF" in "Figure 4.2.2.2.2-1: Registration procedure" and can execute the initial registration procedure. FIGS. 5 and 6 shows "Figure 4.2.2.2.2-1: Registration procedure" in the non-patent document 2.

Although the initial registration procedure is taken as an example of the registration procedure (an example of the registration procedure in which the authentication procedure is left to the normal AMF 310), the registration procedure is not limited to the initial registration procedure. For example, the registration procedure of the first embodiment may be Mobility Registration Update due to a change of a tracking area.

In the initial registration procedure of the first embodiment, in order to entrust the authentication procedure to the normal AMF 310, the process is switched from the nsAMF 100 to the normal AMF 310. For this switchover, a Registration with AMF re-allocation procedure is used.

In the Registration with AMF re-allocation procedure, in a case that the AMF receives a registration request, the AMF forwards (reroutes) the registration request to another AMF.

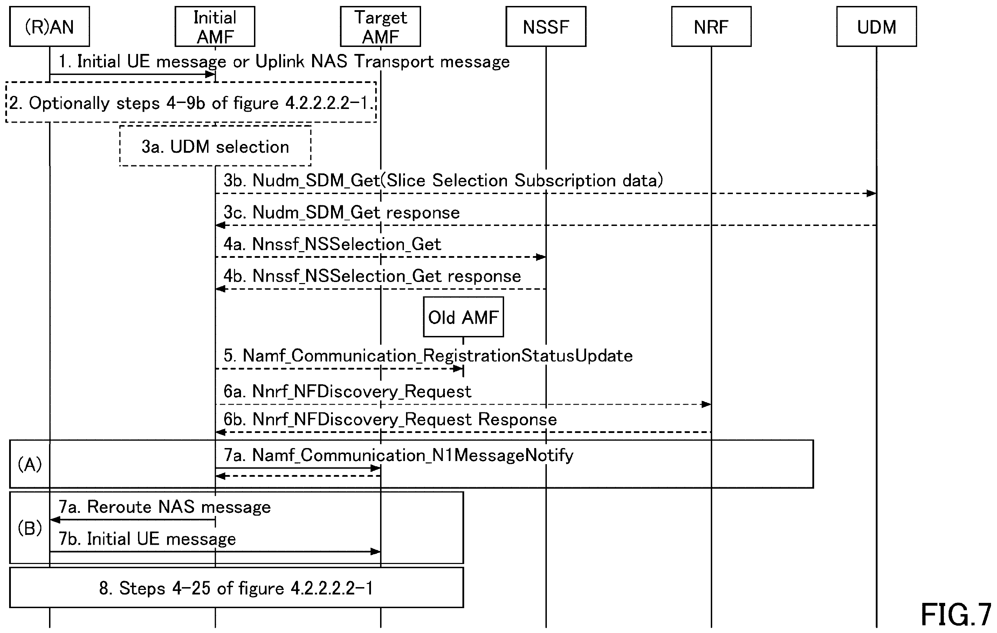

FIG. 7 illustrates a registration with AMF re-allocation procedure (Figure 4.2.2.2.3-1: Registration with AMF re-allocation procedure) in the non-patent document 2. In the first embodiment, basically, the registration with AMF re-allocation procedure is performed in a case where the "Initial AMF" in FIG. 7 is set as the nsAMF 100 and the "Target AMF" is set as the normal AMF 310.

However, since the nsAMF 100 cannot perform the authorization procedure, a process for leaving only the authentication procedure to the AMF 310 is performed by using a part of the registration with AMF re-allocation procedure. Such a registration with AMF re-allocation procedure is a procedure that is not in the related art.

An initial registration procedure in the first embodiment will be described with reference to FIG. 8.

In S101, the terminal 20 sends an initial registration request to the RAN 10.

For example, it is assumed that a configuration corresponding to "transmitting an initial registration request from the terminal 20 in an area covered by the RAN 10 to the nsAMF 100" is made in the RAN 10. Therefore, in S102, the RAN 10 transmits the initial registration request received from the terminal 20 to the nsAMF 100.

Alternatively, the initial registration request transmitted from the terminal 20 may include information instructing to use the nsAMF 100, and the RAN 10 may transmit the initial registration request to the nsAMF 100 based on the information.

The nsAMF 100 that receives the initial registration request executes the registration with AMF re-allocation procedure. Specifically, since the nsAMF 100 does not hold the SUPI of the terminal 20 at this point, it does not initiate the authentication procedure (steps 4 to 9a or 9b of Figure 4.2.2.2.2-1) of the existing technology (FIG. 7). Instead, in step S103, it forwards the initial registration request to the normal AMF 310, which has been preset as the forwarding destination. At this time, the nsAMF 100 includes an "AMF indicator without SEAF function" in the initial registration request (message) and forwards the initial registration request, containing AMF indicator without SEAF function, to the normal AMF 310.

The normal AMF 310, having received the initial registration request from the nsAMF 100, executes the registration with AMF re-allocation procedure. Here, the registration with AMF re-allocation procedure is executed under the condition that the "Initial AMF" in FIG.. 7 corresponds to the normal AMF 310 and the "Target AMF" corresponds to the nsAMF 100. Specifically, in S104, the normal AMF 310 executes an authentication procedure. In this authentication procedure, the normal AMF 310 performs, for example, "8. AUSF selection" and "9. Authentication/Security" as shown in FIG.. 5. In "8. AUSF selection," the AUSF is selected based on SUPI or SUCI. In "9. Authentication/Security," authentication of the terminal 20 is performed using the selected AUSF.

After performing the authentication procedure, the normal AMF 310, in step S105, forwards the initial registration request to the nsAMF 100 based on the indication of AMF without SEAF function included in the initial registration request. That is, when the normal AMF 310 detects that the forwarded initial registration request contains an indication of AMF without SEAF function, it can determine that the initial registration request should be forwarded to the nsAMF 100 after the authentication procedure.

In S106, the nsAMF 100 performs the initial registration procedure with the terminal 20 and completes the procedure. The initial registration procedure here refers to procedures executed in the initial registration procedure shown, for example, in FIGS. 5 and 6 (i.e., Figure 4.2.2.2.2-1 of Non-Patent Document 2), excluding the authentication procedure. For instance, in S106, it is permissible to treat the "New AMF" in FIGS. 5 and 6 as the nsAMF 100 and execute steps 10 through 25 (i.e., the procedures following the authentication procedure) shown in FIGS. 5 and 6.

### (First Embodiment: PDU Session Establishment Procedure)

A PDU session establishment procedure will be described as an example of a procedure not involving an authorization procedure in a case that the nsAMF 100 is used.

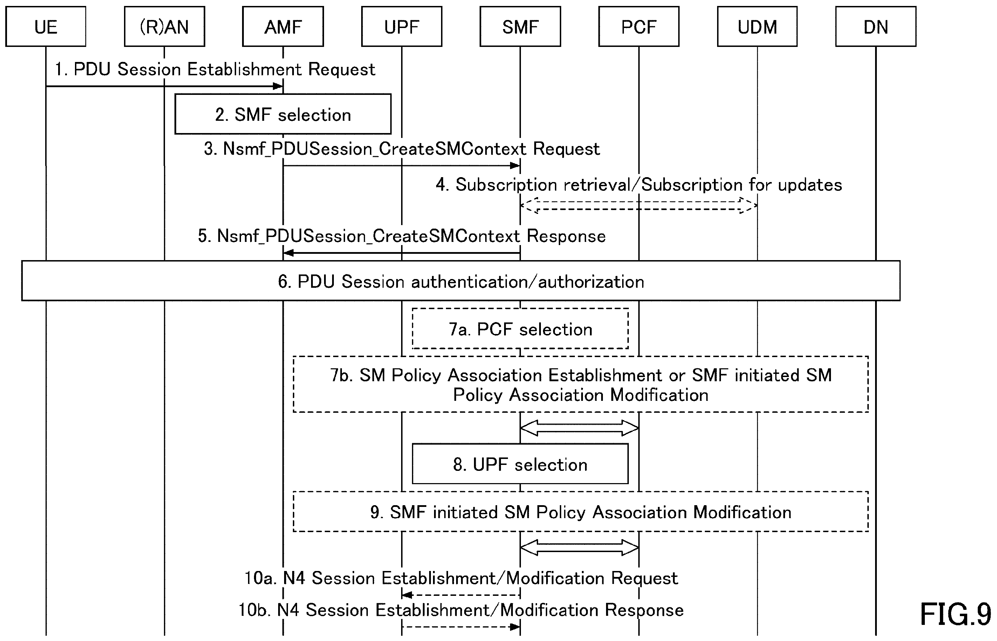

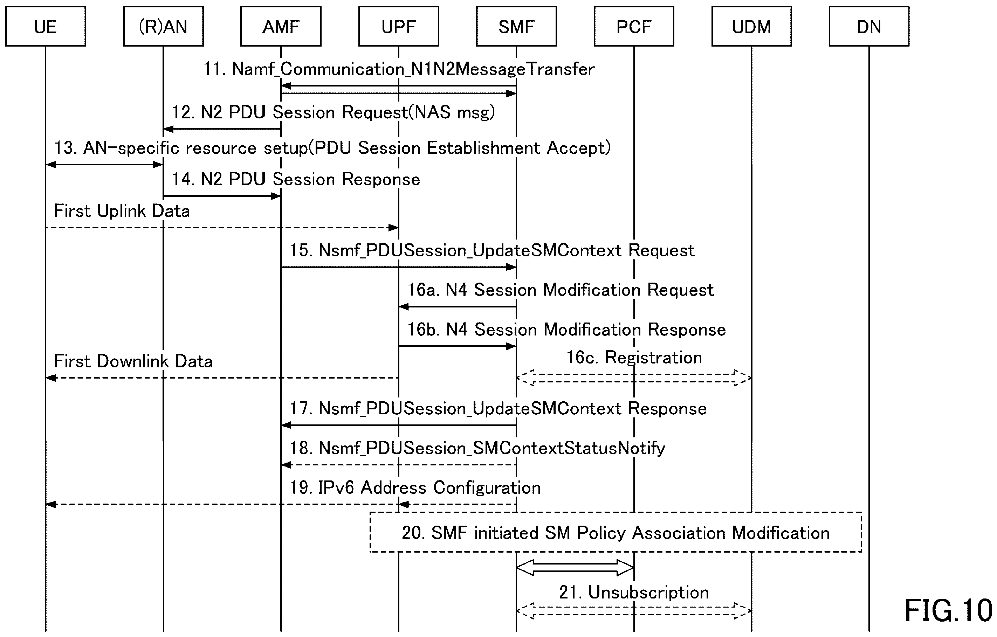

As an example of the PDU session establishment procedure, FIGS. 9 and 10 illustrate "Figure 4.3.2.2.1-1: UE-requested PDU Session Establishment for non-roaming and roaming with local breakout" in non-patent document 2. The nsAMF 100 can execute the procedures described in FIGS. 9 and 10 as, for example, the "AMF" in FIGS. 9 and 10.

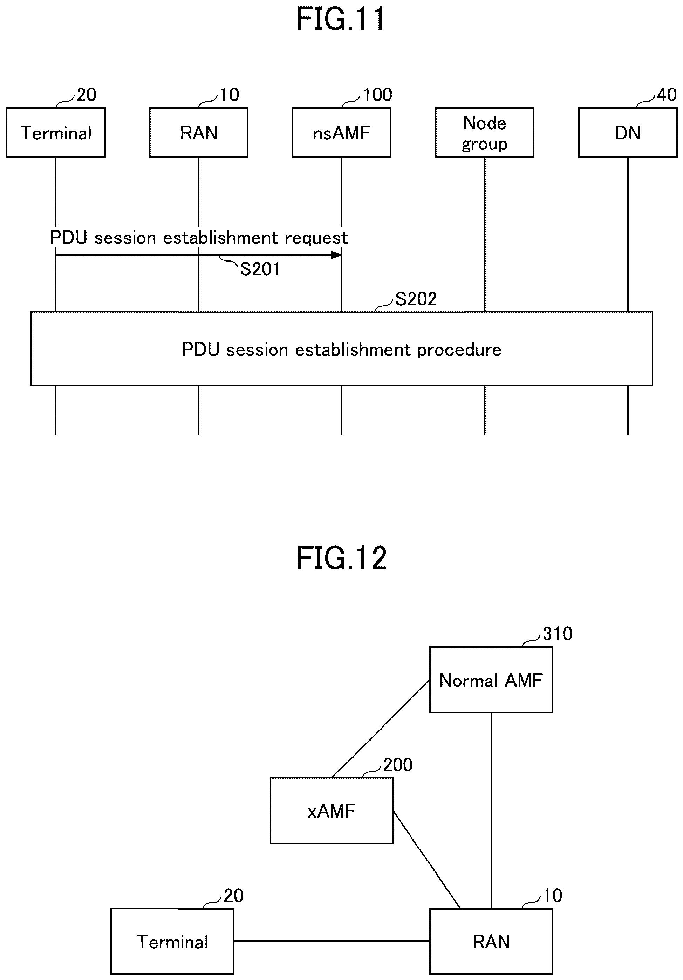

An example of a procedure describing the nsAMF 100 is shown in FIG. 11. In S201 in FIG. 11, the terminal 20 transmits a PDU session establishment request. The nsAMF 100 receives the PDU session establishment request. In S202, a procedure for PDU session establishment is performed. The procedure in S202 may be, for example, the procedures of 2. to 21. in FIGS. 9 and 10.

### (Effects of Technology According to First Embodiment)

The technology according to the first embodiment can reduce signal delay in a communication system. In addition, in the technology according to the first embodiment, a change to an existing network (for example, a 5GC) is small, and a signal delay reduction can be realized in a general-purpose procedure (for example, a procedure not limited to LCS).

### (Overview of Second Embodiment)

Next, a second embodiment will be described. In the second embodiment, as in the first embodiment, in addition to the normal AMF 310, an AMF with reduced functions is arranged in near the RAN 10, thereby reducing the signal delay. In the second embodiment, the AMF is referred to as an xAMF. The "x" in the xAMF may be changed as appropriate depending on which function is to be reduced.

FIG. 12 illustrates an arrangement configuration example of the AMF, the terminal 20, and the RAN 10 in the second embodiment. As shown in FIG. 12, in addition to the normal AMF 310 deployed in the center of the network, the xAMF 200 is disposed near the RAN 10. The RAN 10 can communicate with both the xAMF 200 and the normal AMF 310. Further, communication is possible between the xAMF 100 and the normal AMF 310.

"Near the RAN 10" may mean that a geographical distance from the RAN 10 is small or that a network distance (for example, delay) from the RAN 10 is small. In the case of constructing a virtual node and network on a computer using a container or the like, the network may be a virtual network in the computer.

The xAMF 200 in the second embodiment is an AMF obtained by further reducing the functions from the nsAMF 100 (AMF without the SEAF function) described in the first embodiment.

More specifically, the xAMF 200 in the second embodiment is an AMF that does not have SEAF function, does not have some of the functions of MM (Mobility Management), and holds a UE context. Except for the fact that it does not have the SEAF function and does not have some of the functions of MM (Mobility Management), the functions provided by the xAMF 200 may be the same as those of the normal AMF 310. It should be noted that the xAMF 200 may have the SEAF function.

One of the MM functions of the normal AMF 310 is the function of managing handover (N2HO: N2 Handover) between two RANs (gNBs). In the second embodiment, it is assumed that the xAMF 200 does not have "N2HO" as part of the "MM functions". Hereinafter, an xAMF 200 that does not have the specific function of N2HO is referred to as an aAMF 200, and an xAMF 200 in which the reduced functionality is not limited to N2HO (i.e., a more generalized case of functional reduction) is referred to simply as xAMF 200. It should be noted that the aAMF 200 is an example of the xAMF 200.

Since the aAMF 200, which does not have the N2HO function, can perform procedures such as the PDU session establishment procedure, the terminal-initiated service request procedure, and the network-initiated service request procedure without using the normal AMF 310, it is possible to achieve a reduction in signaling delay in the PDU session establishment procedure, the UE-initiated service request procedure, the network-initiated service request procedure, and the like by deploying the aAMF 200 near the RAN 10.

Furthermore, since the aAMF 200 does not have the N2HO function, its implementation and management become easier compared to the normal AMF 310. It should be noted that "not having the N2HO function" may mean either that the N2HO function exists in the aAMF 200 but is not activated, or that the N2HO function does not exist at all in the aAMF 200.

When the aAMF 200, which is deployed near the RAN 10, is in use and the N2HO, which the aAMF 200 cannot execute, is started, the aAMF 200 merely terminates the NGAP (NG Application Protocol) and transfers the terminal context to the normal AMF 310 deployed in the center of the network. The normal AMF 310 then takes over the remaining procedures of the N2HO. After these procedures are completed, the target normal AMF 310 transfers the terminal context of the relevant terminal to the target aAMF 200. The target aAMF 200 notifies the SMF 370 of its own ID. Detailed procedures will be described later.

The function that the xAMF 200 is assumed not to support (function to reduce) is not limited to the N2HO. When a certain function X is reduced in the xAMF 200, it is possible to reduce signaling delay by deploying the xAMF 200 in proximity to the RAN 10 and using the xAMF 200 in a procedure that does not utilize the function X.

The procedure may be a PDU session establishment procedure, a terminal initiated service request procedure, a network initiated service request procedure, or a procedure other than these.

During the use of the xAMF 200, when a function that is not supported by the xAMF 200 is triggered in the communication system, the xAMF 200 merely terminates the NGAP and transfers the terminal context to the normal AMF 310, entrusting the processing that uses the function to the normal AMF 310. After completing the process, the normal AMF 310 transfers the terminal context after the process back to the xAMF 200. The xAMF 200 then re-establishes cooperation with other network functions (NFs).

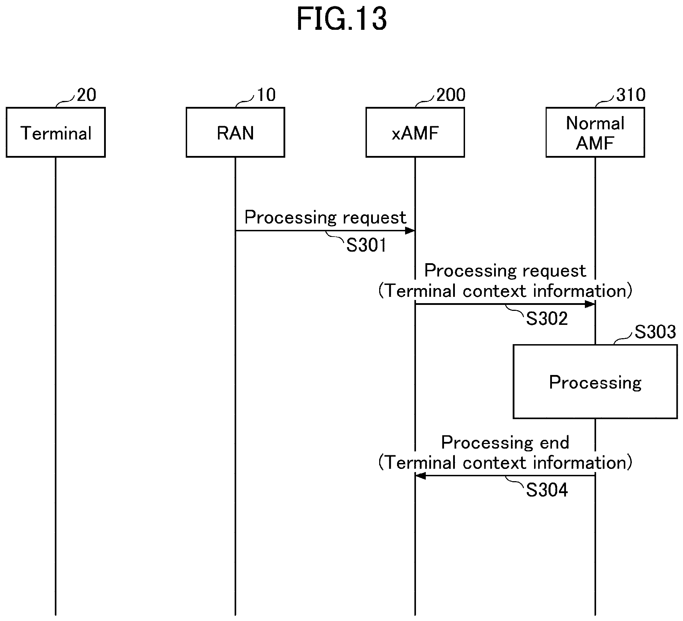

An example of the procedure for the above processing is described with reference to FIG. 13. In S301, the xAMF 200 receives a processing request from the RAN 10. In S302, the xAMF 200 sends a processing request including terminal context information to the normal AMF 310. In S303, the normal AMF 310 performs the processing using a function that the xAMF 200 does not have, and in S304, sends a notification of processing completion including the terminal context information after the processing to the xAMF 200. Thereafter, the xAMF 200 re-establishes cooperation with other network functions (NFs).

The "terminal context" is information indicating a situation of the terminal. The network node apparatus can perform control, service provision, and the like for a certain terminal by holding a terminal context for the terminal.

The terminal context information is information that is a source of the terminal context. The terminal context information may be considered as "terminal context".

The terminal context information for a terminal may include one, some, or all of the following for the terminal: "SUPI, Service area restriction, Allowed NSSAI for each Access Type if available, Tracing Requirements, LTE M Indication, the list of PDU Session IDs along with the corresponding SMF information and the corresponding S-NSSAI(s), PCF ID(s), DNN, UE Radio Capability ID and UE Radio Capability Information, N2 Notify URI". The terminal context information may also include information other than the above.

In the first embodiment, the normal AMF 310 terminates the NGAP, and in the second embodiment, the xAMF 200 terminates the NGAP. However, this is an example, and in the first embodiment, the communication system may be configured such that the nsAMS 100 terminates the NGAP.

### (Second Embodiment: N2HO)

Next, an example of a procedure of the N2HO in a case where the aAMF 200 is used in the second embodiment will be described in detail. Here, "S" indicates that a certain node is a source node of handover, and "T" indicates that a certain node is a destination node of the handover.

The N2HO that does not use the aAMF 200 can be executed, for example, in accordance with the procedure described in "4.9.1.3 Inter NG-RAN node N2 based handover" of the Non-Patent Document 2.

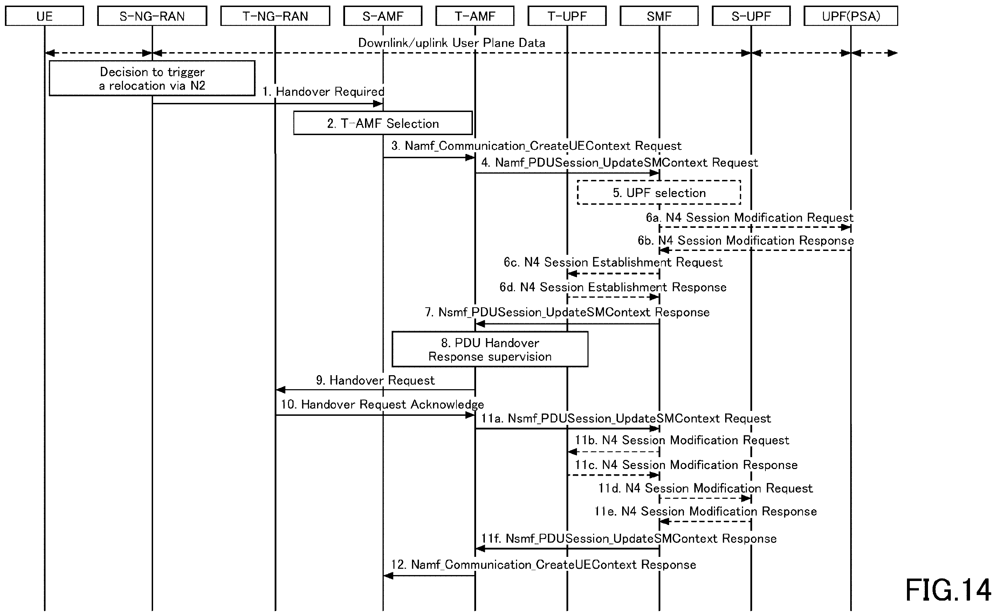

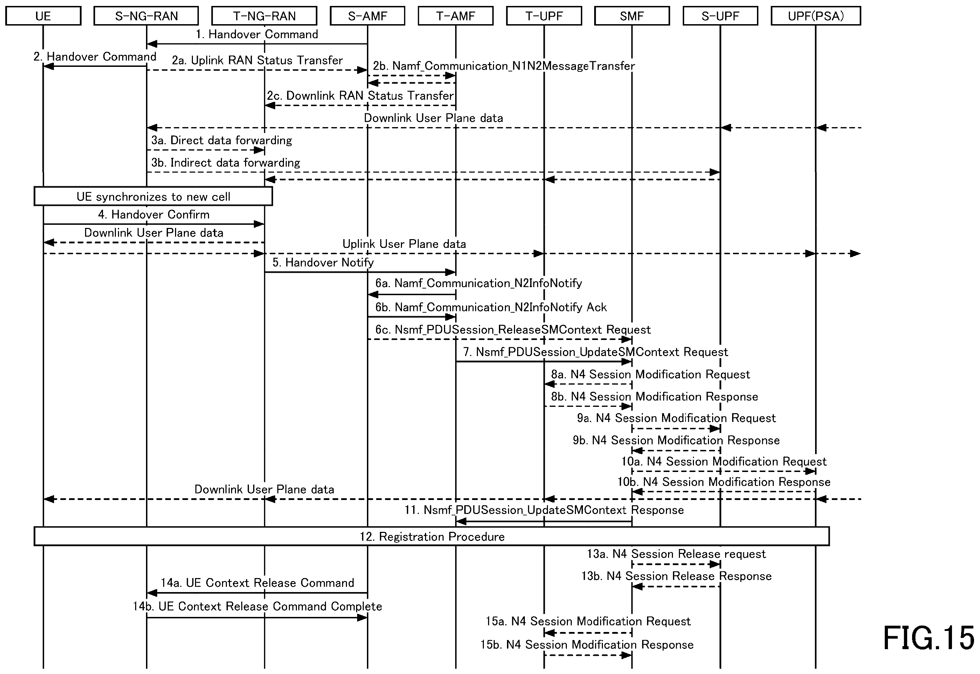

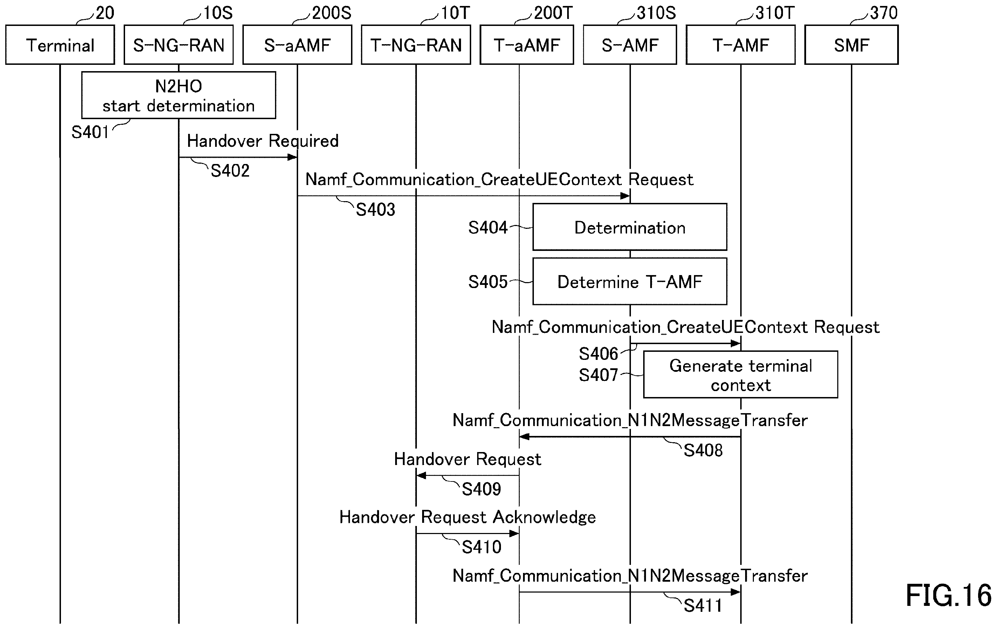

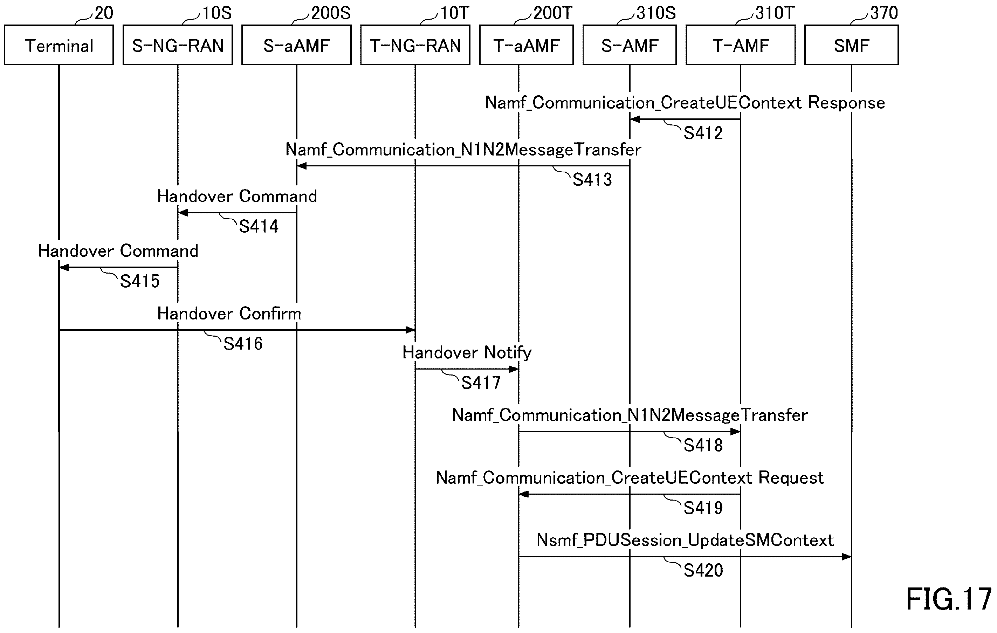

FIG. 14 illustrates "Figure 4.9.1.3.2-1: Inter NG-RAN node N2 based handover, Preparation phase" in Non-Patent Document 2, and FIG. 15 illustrates "Figure 4.9.1.3.3-1: inter NG-RAN node N2 based handover, Execution phase" in Non-Patent Document 2. FIGS. 16 and 17 show procedures in the second embodiment.

The S-AMF 310S and the T-AMF 310T which are normal AMFs can operate, for example, as the S-AMF and T-AMF in FIGS. 14 and 15, respectively, and are capable of executing N2HO. However, when using the aAMF 200 (i.e., S-aAMF 200S and T-aAMF 200T), the S-AMF 310S and the T-AMF 310T execute the N2HO via the S-aAMF 200S and T-aAMF 200T, respectively.

An example of a procedure of the N2HO in the second embodiment will be described with reference to FIGS. 16 and 17.

In S401, the S-NG-RAN 10S determines N2HO activation between NG-RAN nodes. This process corresponds to "Decision to trigger a relocation via N2" in FIG. 14.

In S402, the S-NG-RAN 10S transmits a Handover Required to the S-aAMF 100S. This process corresponds to "1. Handover Required" in FIG. 14.

In S403, the S-aAMF 200S transmits Namf_Communication_CreateUEContext Request (terminal context creation request), which includes the Handover Required, to the S-AMF 310S that has been preconfigured as a forwarding destination.

This Namf _Communication_CreateUEContext Request includes, in addition to the Handover Required, the terminal context information for the terminal 20 that is held by the S-aAMF 200S.

In S404, the S-AMF 310S determines that it does not immediately create the terminal context, based on the presence of the Handover Required within the Namf _Communication_CreateUEContext Request.

In S405, the S-AMF 310S determines the T-AMF 310T. This process corresponds to "2. T-AMF Selection" in FIG. 14.

In S406, the S-AMF 310S transmits Namf _Communication_CreateUEContext Request to the T-AMF 310T. This process corresponds to "3. Namf_Communication_CreateUEContext Request" in FIG. 14. This Namf_Communication_CreateUEContext Request includes the terminal context information.

In S407, the T-AMF 310T creates a terminal context in the T-AMF 310T (holds the terminal context information).

In S408, the T-AMF 310T transmits a Namf _Communication_N1N2MessageTransfer, which includes the Handover Request, to the T-aAMF 200T.

In S409, the T-aAMF 200T transmits Handover Request to the T-NG-RAN 10T. This process corresponds to "9. Handover Request" in FIG. 14.

In S410, the T-NG-RAN 10T transmits Handover Request Acknowledge to the T-aAMF 200T. This process corresponds to "10. Handover Request Acknowledge" in FIG. 14.

In S411, the T-aAMF 100T transmits Namf _Communication_N1N2MessageTransfer, which includes the Handover Request Acknowledge, to the T-AMF 310T.

In S412 of FIG. 17, the T-AMF 310T transmits Namf_Communication_CreateUEContext Response to the S-AMF 310S. The Namf_Communication_CreateUEContext Response includes information necessary for generating the Handover Command. The processing in step S412 corresponds to "12.
Namf _Communication_CreateUEContext Response" in FIG. 14.

In S413, the S-AMF 310S transmits Namf _Communication_N1N2MessageTransfer, which includes the Handover Command, to the S-aAMF 200S.

In S414, the S-aAMF 200S transmits Handover Command to the S-NG-RAN 10S. This process corresponds to "1. Handover Command" in FIG. 15.

In S415, the S-NG-RAN 10S transmits Handover Command to the terminal 20. This process corresponds to "2. Handover Command" in FIG. 15.

In S416, the terminal 20 transmits Handover Confirm to the T-NG-RAN 10T. This process corresponds to "4. Handover Confirm" in FIG. 15.

In S417, the T-NG-RAN 10T transmits Handover Notify to the T-aAMF 200T. This process corresponds to "5. Handover Notify" in FIG. 15.

In S418, the T-aAMF 200T transmits Namf _Communication_N1N2MessageTransfer, which includes the Handover Notify, to the T-AMF 310T. Upon confirming the Handover Notify in the Namf_Communication_N1N2MessageTransfer, the T-AMF 310T determines that the N2HO procedure has been successfully completed.

In S419, the T-AMF 310T transmits Namf_Communication_CreateUEContext Request to the T-aAMF 200T. This
Namf_Communication_CreateUEContext Request includes the terminal context information for the terminal 20 after the handover.

### Upon receiving the

Namf _Communication_CreateUEContext Request, the T-aAMF 200T creates the terminal context within the T-aAMF 100T.

In S420, the T-aAMF 200T transmits Nsmf_PDUSession_UpdateSMContext including the T-aAMF ID to the SMF 370.

### <Other Examples>

In the above example, two AMFs, which are the S-AMF 310S and the T-AMF 310T, are used as normal AMFs. However, when the S-AMF 310S accommodates both the T-aAMF 200T and the S-aAMF 200S, N2HO can be performed using only the S-AMF 310S, without using the T-AMF 310T. In this case, the S-AMF 310S also functions as the T-AMF 310T.

Furthermore, when the S-aAMF 200S accommodates both the S-NG-RAN 10S and the T-NG-RAN 10T, N2HO can be performed by communicating with the S-AMF 310S using only the S-aAMF 200S, without using the T-aAMF 200T. In this case, the S-aAMF 200S also functions as the T-aAMF 200T.

### (Effects of technology according to second embodiment)

With the technology according to the second embodiment, it becomes possible to reduce signaling delay in the communication system. Furthermore, the technology of the second embodiment requires only small modifications to the existing network (e.g., 5GC) and enables the reduction of signaling delay in generic procedures (not limited to, for example, LCS).

### (Apparatus Configuration)

Next, examples of functional configurations of the base station 10, the terminal 20, and various network node apparatuses that perform the processes and operations described above will be described. The base station 10, the terminal 20, and various network node apparatuses include functions for implementing the above-described embodiments. However, the base station 10, the terminal 20, and the various network node apparatuses may each include only some of the functions in the embodiments. Note that the base station 10 may be one of "network node apparatuses".

### <Base Station 10 and Network Node Apparatus>

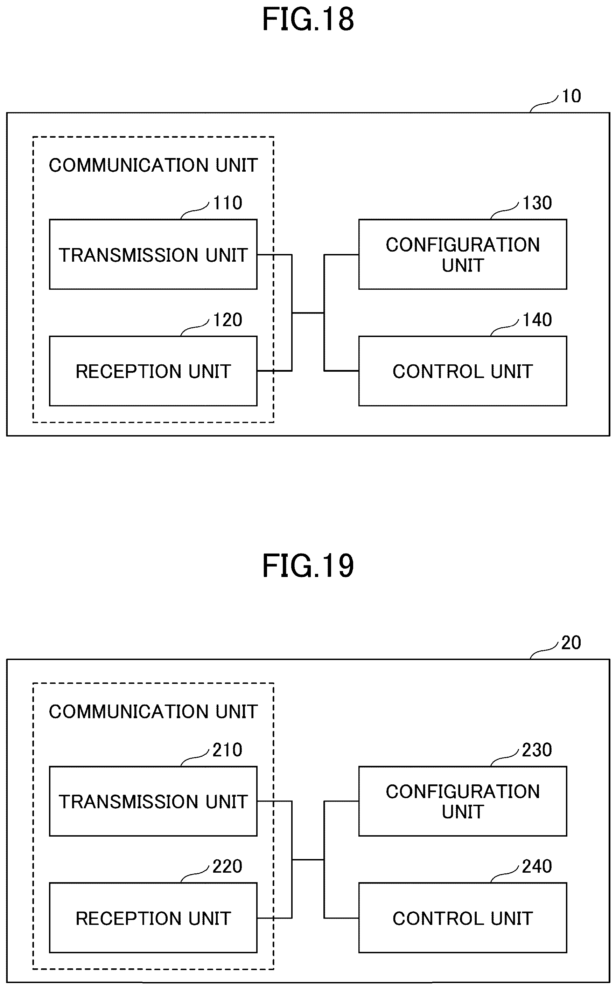

FIG. 18 is a diagram illustrating an example of a functional configuration of the base station 10. As illustrated in FIG. 18, the base station 10 includes a transmission unit 110, a reception unit 120, a configuration unit 130, and a control unit 140. The functional configuration illustrated in FIG. 18 is merely an example. As long as the operation according to the embodiment of the present invention can be performed, the functional division and the name of the functional unit may be any.

Further, the network node apparatus has the functional configuration illustrated in FIG. 18, similarly to the base station 10. For example, nsAMF, xAMF, and aAMF all have the functional configuration illustrated in FIG. 18.

Further, the network node apparatus having a plurality of different functions on the system architecture may be configured by a plurality of network node apparatuses separated for each function.

The transmission unit 110 includes a function of generating a signal to be transmitted to the terminal 20 or another network node apparatus and transmitting the signal in a wired or wireless manner. The reception unit 120 includes a function of receiving various signals transmitted from the terminal 20 or another network node apparatus and acquiring, for example, information of a higher layer from the received signal.

The configuration unit 130 stores configuration information set in advance and various types of configuration information to be transmitted to the terminal 20 or the like in a storage device, and reads the configuration information from the storage device as necessary.

The control unit 140 controls the apparatus. The functional unit related to signal transmission in the control unit 140 may be included in the transmission unit 110, and the functional unit related to signal reception in the control unit 140 may be included in the reception unit 120.

### <Terminal 20>

FIG. 19 is a diagram illustrating an example of a functional configuration of the terminal 20. As illustrated in FIG. 19, the terminal 20 includes a transmission unit 210, a reception unit 220, a configuration unit 230, and a control unit 240. The functional configuration illustrated in FIG. 19 is merely an example. As long as the operation according to the embodiment of the present invention can be performed, the functional division and the name of the functional unit may be any. A USIM attached in the terminal 20 may include the transmission unit 210, the reception unit 220, the configuration unit 230, and the control unit 240, similarly to the terminal 20.

The transmission unit 210 generates a transmission signal from transmission data and wirelessly transmits the transmission signal. The reception unit 220 wirelessly receives various signals and acquires a signal of a higher layer from the received signals of the physical layer. The reception unit 220 has a function of receiving an NR-PSS, an NR-SSS, an NR-PBCH, a DL/UL control signal, a reference signal, or the like transmitted from a network node.

The configuration unit 230 stores various types of configuration information received from the network node by the reception unit 220 in the storage device, and reads the configuration information from the storage device as necessary. The configuration unit 230 also stores configuration information that is set in advance.

The present specification discloses at least the following Supplementary Notes 1 and 2.

### <Supplementary Note 1>

### [Clause 1]

A network node apparatus including:
a reception unit configured to receive a request for a specific process from a base station when a procedure, for the specific process, including an authentication procedure for a terminal, is executed in a communication system; and
a transmission unit configured to transfer the request to a specific network node apparatus that includes a function for executing the authentication procedure.

### [Clause 2]

The network node apparatus as described in Clause 1,
wherein the request includes information indicating the network node apparatus, and
wherein, after the authentication procedure is executed by the specific network node apparatus, the reception unit receives the request transferred from the specific network node apparatus based on the information.

### [Clause 3]

The network node apparatus as described in Clause 1 or 2,
wherein the network node apparatus corresponds to an apparatus obtained by deleting a function for executing the authentication procedure from the specific network node apparatus, and
wherein a distance between the network node apparatus and the base station is smaller than a distance between the specific network node apparatus and the base station.

### [Clause 4]

A communication system including:
a network node apparatus including:
a reception unit configured to receive a request for a specific process from a base station when a procedure, for the specific process, including an authentication procedure for a terminal, is executed in a communication system; and
a transmission unit configured to transfer the request to a specific network node apparatus that includes a function for executing the authentication procedure, and
the specific network node apparatus.

### [Clause 5]

A communication method executed by a network node apparatus, the communication method including:
a reception step of receiving a request for a specific process from a base station when a procedure, for the specific process, including an authentication procedure for a terminal, is executed in a communication system; and
a transmission step of transferring the request to a specific network node apparatus that includes a function for executing the authentication procedure.

According to any of clauses 1 to 5, a technique that enables reduction of signal delay in a communication system is provided. According to clause 2, the specific network node apparatus can determine that the request should be forwarded to the network node apparatus after the authentication procedure is executed. According to clause 3, the network node apparatus can be easily implemented, and the network node apparatus can be installed at an appropriate place.

### <Supplementary Note 2>

### [Clause 1]

A network node apparatus including:
a transmission unit configured to transmit a request including terminal context information for a terminal to a specific network node apparatus including a function for executing a specific process when receiving a request of the specific process for the terminal from a base station; and
a reception unit configured to receive the terminal context information for which the specific process has been executed from the specific network node apparatus, after the specific process is executed in the specific network node apparatus.

### [Clause 2]

The network node apparatus as described in Clause 1,
wherein the network node apparatus corresponds to an apparatus obtained by deleting a function for executing the specific process from the specific network node apparatus, and
wherein a distance between the network node apparatus and the base station is smaller than a distance between the specific network node apparatus and the base station.

### [Clause 3]

A network node apparatus including:
a transmission unit configured to transmit a request including terminal context information for a terminal to a specific network node apparatus including a function for executing a handover process when receiving a request of the handover process for the terminal from a base station; and
a reception unit configured to receive a message including a handover command from the specific network node apparatus.

### [Clause 4]

A network node apparatus including:
a reception unit configured to receive message including a handover request for a terminal from a specific network node apparatus including a function for executing a handover process; and
a transmission unit configured to transmit the handover request to a base station of a move destination of the terminal,
wherein the reception unit receives terminal context information for the terminal from the specific network node apparatus after the handover process completes.

### [Clause 5]

The network node apparatus as described in Clause 4,
wherein the transmission unit transmits identification information of the network node apparatus to a session management apparatus.

### [Clause 6]

A communication method executed by a network node apparatus, the communication method including:
a transmission step of transmitting a request including terminal context information for a terminal to a specific network node apparatus including a function for executing a specific process when receiving a request of the specific process for the terminal from a base station; and
a reception step of receiving the terminal context information for which the specific process has been executed from the specific network node apparatus, after the specific process is executed in the specific network node apparatus.

According to any of clauses 1 to 6, a technique that enables reduction of signal delay in a communication system is provided. According to clause 2, the network node apparatus can be easily implemented, and the network node apparatus can be installed at an appropriate place. According to clause 5, the network node apparatus can communicate with the session management apparatus.

### (Hardware Configuration)

The block diagrams (FIGS. 18 and 19) used in the description of the embodiment described above illustrate the block of functional units. Such functional blocks (configuration parts) are attained by at least one arbitrary combination of hardware and software. In addition, an attainment method of each of the functional blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

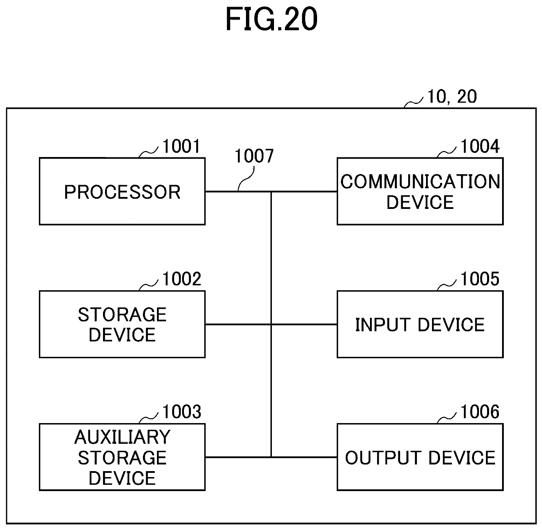

For example, the network node apparatus, and the terminal 20 and the like in one embodiment of this disclosure may function as a computer for performing the processing of a radio communication method of this disclosure. FIG. 20 is a diagram illustrating an example of a hardware configuration of the base station 10 and the terminal 20 and the like according to one embodiment of this disclosure. The network node apparatus may have the same hardware configuration as the base station 10. Likewise, the USIM may have the same hardware configuration as the terminal 20. The base station 10, the network node apparatus and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 and the like may be configured to include one or a plurality of apparatuses illustrated in the drawings, or may be configured not to include a part of the apparatuses.

Each function of the base station 10, the network node apparatus and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the base station 10/the network node apparatus shown in FIG. 18 may be attained by a control program that is stored in the storage device 1002 and is operated by the processor 1001. Also, for example, the control unit 240 of the terminal 20 shown in FIG. 19 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wired network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, The base station 10, the network node apparatus and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

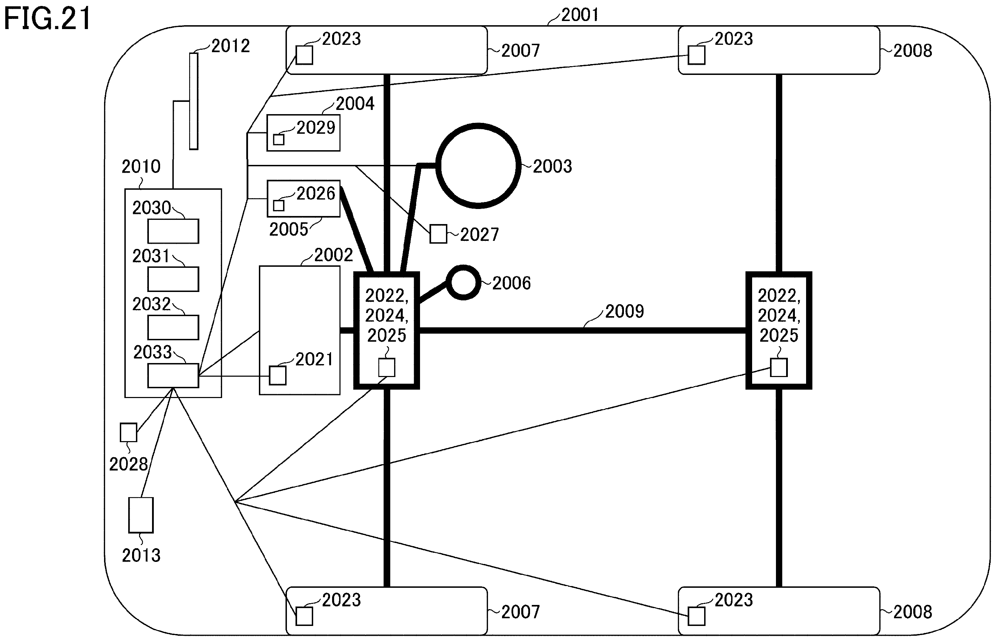

FIG. 21 shows a configuration example of a vehicle 2001 according to the present embodiment. As shown in FIG. 21, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The aspect/embodiment (fire example, the base station 10, the terminal, xAMF, nsAMF, or aAMF) described in the present disclosure may be applied to a communication apparatus mounted on the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

The information service unit 2012 may include an input device (for example, a keyboard, a mouse, a microphone, a switch, a button, a sensor, a touch panel, etc.) that receives input from external sources and may also include an output device (for example, a display, a speaker, an LED lamp, a touch panel, etc.) that provides output to external destinations.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of, signals from the various sensors 2021 to 2029 described above input to the electronic control unit 2010, information obtained based on the signals, and information based on input from the outside (user) obtained via the information service unit 2012 to an external device via radio communication. The electronic control unit 2010, the various sensors 2021 to 2029, the information service unit 2012, and the like may be referred to as an input unit that receives an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on the PDSCH (or data/information decoded from the PDSCH) received by the communication module 2013).

In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10, the network node apparatus and the terminal 20 have been described by using a functional block diagram, but such an apparatus may be attained by hardware, software, or a combination thereof. Each of software that is operated by a processor of the base station 10, the network node apparatus and the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G),xth generation mobile communication system (xG) (xG, where x is, for example, an integer or a decimal), FRA (Future Radio Access),NR (New Radio), New Radio Access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, generated, or specified on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In the present disclosure, the terms "Mobile Station (MS)", "user terminal", "User Equipment (UE)", "terminal", and the like may be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. Moreover, the mobile object may be an autonomous mobile object that operates based on operation commands. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the user terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be an exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In the terminal 20, one or a plurality of BWPs may be configured within one carrier.

At least one of the configured BWPs may be active, and it need not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

10 base station (RAN)
110 transmission unit
120 reception unit
130 configuration unit
140 control unit
20 terminal
30 core network
40 DN
210 transmission unit
220 reception unit
230 configuration unit
240 control unit
310 AMF
320 UDM
330 NEF
340 NRF
350 AUSF
360 PCF
370 SMF
380 UPF
390 AF
391 CHF
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A network node apparatus comprising:
a reception unit configured to receive a request for a specific process from a base station when a procedure, for the specific process, including an authentication procedure for a terminal, is executed in a communication system; and
a transmission unit configured to transfer the request to a specific network node apparatus that includes a function for executing the authentication procedure.

2. The network node apparatus as claimed in claim 1,
wherein the request includes information indicating the network node apparatus, and
wherein, after the authentication procedure is executed by the specific network node apparatus, the reception unit receives the request transferred from the specific network node apparatus based on the information.

3. The network node apparatus as claimed in claim 1,
wherein the network node apparatus corresponds to an apparatus obtained by deleting a function for executing the authentication procedure from the specific network node apparatus, and
wherein a distance between the network node apparatus and the base station is smaller than a distance between the specific network node apparatus and the base station.

4. A communication system comprising:
a network node apparatus comprising:
a reception unit configured to receive a request for a specific process from a base station when a procedure, for the specific process, including an authentication procedure for a terminal, is executed in a communication system; and
a transmission unit configured to transfer the request to a specific network node apparatus that includes a function for executing the authentication procedure; and
the specific network node apparatus.

5. A communication method executed by a network node apparatus, the communication method comprising:
a reception step of receiving a request for a specific process from a base station when a procedure, for the specific process, including an authentication procedure for a terminal, is executed in a communication system; and
a transmission step of transferring the request to a specific network node apparatus that includes a function for executing the authentication procedure.
